# EUROPEAN PATENT APPLICATION

(11) **EP 3 823 248 A1**
(43) Date of publication of application: **19.05.2021**
(21) Application number: 19306472.2
(22) Date of filing: 15.11.2019
(51) Int. Cl.: H04L 29/08, H04L 29/06

(54) **METHOD AND APPARATUS FOR COMPRESSION PROFILE DISTRIBUTION**

(71) Applicant: ACKLIO, 35510 Cesson-Sévigné (FR)
(72) Inventor: PELOV, Alexander, 35510 CESSON-SEVIGNE (FR); MINABURO, Ana, 35510 CESSON-SEVIGNE (FR)
(74) Representative: Marks & Clerk France

(57) **Abstract**

Header compression/decompression profiles are stored in a central registry, or database, and provided on demand, on initialisation of a new device, from time to time, or otherwise, to gateways communicating with one or more endpoints in accordance with the profile in question. The profile to be retrieved is selected on the basis of an identity value included in a message transmitted from the endpoint. The identity may be unique to a particular endpoint, or a type or class of endpoints using a particular profile, or correspond directly to the profile, or otherwise. Distributed registry structures, possibly including private and public registers, are proposed. Different classes of information may be associated with each profile, which may be subject to varying degrees of protection, and or varying access conditions.

## Description

### Field of the invention

The present invention relates generally to the processing of data messages, and in particular the compression of such data.

### Background of the invention

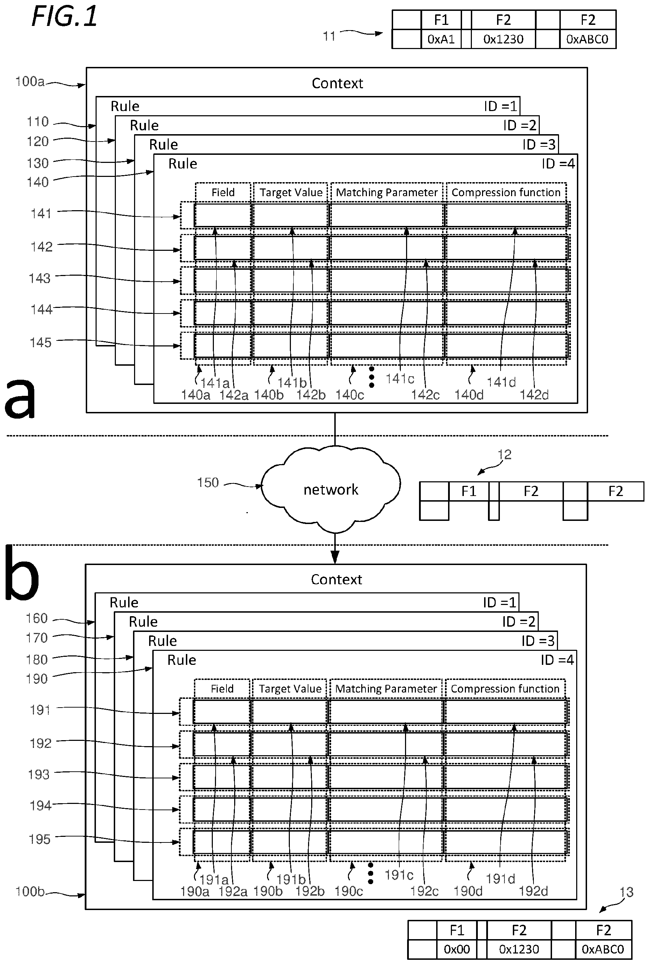

Figure 1 shows schematically aspects of a network header compression mechanism as known in the prior art.
Specifically, figure 1 shows elements of a mechanism for header compression for IPv6 networks, substantially as proposed in LPWAN Static Context Header Compression (SCHC) for IPv6 and UDP draft-ietf-lpwan-ipv6-static-context-hc-00
As shown, data are to be transmitted from a transmitting device A to a receiving device B via an IPv6 based LPWAN network 150. Due to limitations such as the power or bandwidth availability at the transmitting device, it may be desirable to reduce the total amount of data to be transmitted. In accordance with the mechanism of figure 1, a data packet comprising a number of defined fields for transmission is exposed to a set of Rules 110, 120, 130, 140, which together constitute a context 100a. Each Rule comprises a plurality of Field instruction lines. For example, the Rule 140 comprises Field instruction lines 141, 142, 143, 144, 145 etc. The Field Description lines have a common structure comprising four entries. Specifically, each Field Description line comprises a Field ID specifying one of the defined fields of the data packet, a Target Value, a Matching Operator and a Compression/decompression Action. Thus as shown, the Fields of Rule 141 can be seen as structured into four columns 140a, 140b, 140c, 140d. Accordingly, Field Description line 141 has a Field ID 141a, a Target Value 141b, a Matching Operator 141c and a Compression/Decompression Action 141d. Similarly, Field Description lines 142 have a Field ID142a, a Target Value 142b, a Matching Operator 142c and a Compression/Decompression Action 142d.
In operation, a data packet processed at the transmitter side is compared successively to each Rule, and with each rule successively to each Field Description line of that Rule using a Matching Operator.
For each Field Description line it is determined whether the Target Value entry of the field referenced in the Field ID entry corresponds in a prescribed manner as defined in the Matching Operator entry of that Field Description line. In a case where referenced field corresponds to the Target Value in the prescribed manner for every field in a respective rule, the Compression/Decompression Action of each field in the corresponding rule is applied.
The possible Matching operators include the operators "ignore" or "Equals" MSB (length) and Match-mapping from a list.
By way of example, Rule 140 might comprise the three fields shown below.

| Figure reference | Field ID | Target Value | Matching Operator | Compression Function |
|---|---|---|---|---|
| 141 | F1 | 0x00 | Ignore | not-sent |
| 142 | F2 | 0x1230 | Equal | not-sent |
| 143 | F3 | 0xABC0 | Equal | not-sent |

On this basis, the first field in the data packet would be exposed first to Field instruction line 141, since the method of comparison prescribed in the Matching operator entry for this field is "Ignore", this comparison is automatically satisfied. The method then proceeds to Field instruction line 142, for which the manner of comparison prescribed in the Matching operator entry is "Equal". Accordingly, the field F2 of the data packet must comprise the Target value "0x1230", as defined in the Target Value Field. The method then proceeds to Field instruction line 143, for which the manner of comparison prescribed in the Matching operator entry is "Equal". Accordingly, the field F3 of the data packet must comprise the Target value "0xABC0", as defined in the Target Value Field.
Assuming all three Fields in rule 140 are satisfied on this basis, Rule 140 is selected for application. On this basis, the compression instruction of each field in the rule 140 is applied to the data packet.
As shown above, the compression function for all three Field instruction lines of rule 141 is "not sent", indicating that each of the three fields in question F1, F2 and F3 is stripped from the packet to be transmitted.
As shown in figure 1 the compressed packet is then transmitted via the network 150 to the receiving side b, together with an identifier of the Rule 140 that has been applied, ID4.
As shown, a set of Rules 160, 170, 180, 190, corresponding to rules 110, 120, 130 140 as described above respectively together constitute a context 100b. The context 100b corresponds in structure and content to context 100a, so that each Rule comprises a plurality of Field instruction lines. For example, the Rule 190 comprises Field instruction lines 191, 192, 193, 194, 195 etc. The Field instruction lines have a common structure comprising four entries. Specifically, each Field instruction line comprises a Field Reference specifying one of the defined fields of the data packet, a Target Value, a Matching Operator and a Compression/Decompression Action. Thus as shown, the Field instruction lines of Rule 191 can be seen as structured into four columns 190a, 190b, 190c, 190d. Accordingly, Field instruction line 191 has a Field Reference 191a, a Target Value 191b, a Matching Parameter 191c and a Compression function 191d. Similarly, Field instruction lines 192 has a Field Reference 192a, a Target Value 192b, a Matching Parameter 192c and a Compression function 192d.
In operation, the received data packet is processed in accordance with the rule specified by the received transmission, that is, Rule ID4, corresponding to Rule 190. Each Field instruction line in the specified rule is applied to the respective field in the prescribed manner.

With reference to a Rule 190 that is identical to rule 140 as presented above, as indicated by the unique rule ID, ID4, the Rule 190 might comprise the three fields shown below.

| Figure reference | Field Reference | Target Value | Matching Operator | Compression Function |
|---|---|---|---|---|
| 141 | F1 | 0x00 | Ignore | not-sent |
| 142 | F2 | 0x1230 | Equal | not-sent |
| 143 | F3 | 0xABC0 | Equal | not-sent |

On this basis, the first field F1 in the data packet would be filled with the value 0x00, the second field F2 in the data packet would be filled with the value 0x1230 and the third field F3 in the data packet would be filled with the value 0xABC0.
It may be observed on this basis that the resulting packet 13 is identical to the original packet 11, apart from the value of Field F1, where the original value 0xA1 has been replaced by the value 0x00, by the operation of the "ignore" Matching operator in field 141c. It will be appreciated that in certain cases it may be determined that the value of a particular field can safely default to a predetermined value in this way without interfering with overall system operation.
Compression/Decompression operations defined in the standard mentioned above include the following.

| Function | Compression | Decompression |
|---|---|---|
| not-sent | elided | use value stored in Target Value of the instruction line |
| value-sent | send | build from received value |
| LSB(length) | send LSB | use value stored in Target Value of the instruction line value OR received value |
| compute-IPv6-length | elided | compute IPv6 length |
| compute-UDP-length | elided | compute UDP length |
| compute-UDP-checksum | elided | compute UDP checksum |
| ESiid-DID | elided | build IID from L2 ES address |
| LAiid-DID | elided | build IID from L2 LA address |

Mechanisms such as that described with reference to figure 1 provide a basis for reducing the data flow in networks.
A compressor/decompressor operating on this basis has a hard-coded knowledge of the protocols according to which it is to compress/decompresses. For example, a particular SCHC Compressor/Decompressor might be configured to processing according to an IP/UDP/CoAP protocol stack.

As the number of devices using such communications systems grows, and correspondingly the number of types of device, and respective choices of protocol stack it is desirable to provide mechanisms for further optimizing such communications.

### Summary of the invention

In accordance with the present invention in a first aspect there is provided a gateway for a communication system supporting header compression, comprising a one or more endpoint devices, one or more gateway devices, said header compression being performed with regard to a profile available at a said endpoint device and a respective said gateway. The header compression is defined by a profile stored in a registry. The gateway is adapted to extract an identifier from a message received from said end point, to retrieve the profile corresponding to the identifier from the registry, and to communicate with said endpoint on the basis of the retrieved profile.

In accordance with the present invention in a second aspect, there is provided a communication system supporting header compression, comprising a one or more said endpoint devices, one or more gateway devices according to the first aspect a registry as presented with reference to the first aspect.

In accordance with a development of the first or second aspects, the identifier corresponds uniquely to a respective said endpoint device, and the registry is configured to determine the profile corresponding to the device identifier, and to provide the corresponding profile.

In accordance with a development of the first or second aspects, the identifier corresponds to a profile that is common to one or more endpoint devices.

In accordance with a development of the first or second aspects, successive communications with an endpoint with the same identifier are performed using the profile.

In accordance with a development of the first or second aspects, the endpoint device is adapted to include the identifier in a bitstream transmitted to said gateway, wherein the bitstream is padded so as to byte align the identifier.

In accordance with a development of the first or second aspects, the endpoint device is adapted to further include a marker bit sequence in the bitstream transmitted by the endpoint device in byte alignment with the identifier.

In accordance with a development of the first or second aspects, the endpoint device is adapted to further include authentication data in the bitstream transmitted by the endpoint device.

In accordance with a development of the first or second aspects, the system is adapted to notify a third party of the successful authentication of an endpoint.

In accordance with a development of the first or second aspects, for any endpoint the registry comprises an endpoint entry comprising public information and private information, where the private information is encrypted to a higher degree than said public information, wherein the profile is stored in the endpoint entry.

In accordance with the present invention in a third aspect there is provided an endpoint comprising storage means storing a profile and an identifier, the endpoint being adapted to perform header compression of messages transmitted to a gateway in accordance with the profile, the endpoint being further adapted to incorporate the identifier in at least one message transmitted to said gateway. The endpoint is adapted to transmit the identifier to the respective gateway so as to enable the gateway to retrieve the profile from a registry and to communicate with the endpoint on the basis thereof.

In accordance with the present invention in a fourth aspect there is provided a registry adapted to return to a gateway a profile associated with an identifier provided by said gateway, said identifier having been extracted from a message header compressed in accordance with said profile by an endpoint.

In accordance with the present invention in a fifth aspect there is provided a method of performing header compression in communications between an endpoint and a gateway, the method comprising:
- the gateway receiving a message compressed in accordance with a profile comprising an Identifier,
- the gateway retrieving a profile corresponding to said identifier from a registry, and
- the gateway decompressing a message from endpoint on the basis of said profile.

In accordance with a development of the fifth aspect, the method comprises the further steps corresponding to the operations of any of the components of the first, second, third or fourth aspects.

In accordance with the present invention in a sixth aspect there is provided a computer program comprising instructions which, when the program is executed by a computer, cause the computer to carry out the method of the fifth aspect.

### Brief Description of the Drawings

The above and other advantages of the present invention will now be described with reference to the accompanying drawings, for illustration purposes only, in which:
- Figure 1: shows schematically aspects of a network header compression mechanism as known in the prior art;
- Figure 2: shows a communication system supporting header compression in accordance with an embodiment;
- Figure 3: presents an embodiment of a distributed registry;
- Figure 4: shows an endpoint in accordance with an embodiment;
- Figure 5: shows a registry in accordance with an embodiment;
- Figure 6: shows the steps of a message in accordance with an embodiment;
- Figure 7: shows a generic computing system suitable for implementation of embodiments of the invention; and
- Figure 8: shows a standalone sensor device adaptable to constitute an embodiment.

### Detailed description

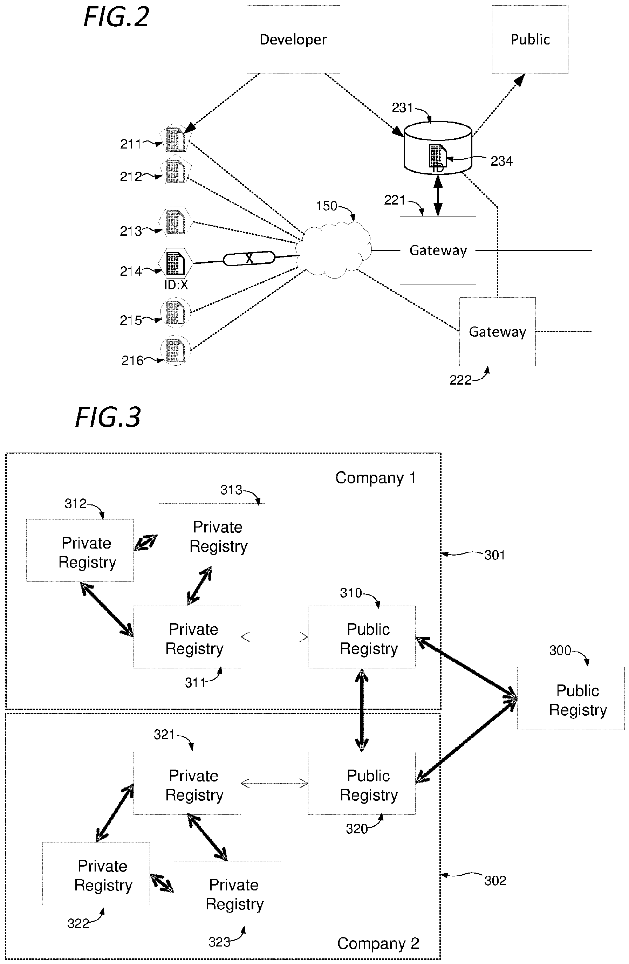

Figure 2 shows a communication system supporting header compression in accordance with an embodiment.

As shown, the system comprising an endpoint device 214, and optionally further endpoint devices, e.g. endpoint devices 211, 212, 213, 215 and 216 as shown. The system further comprises a gateway device 221, and optionally further gateway devices, e.g. gateway device 222 as shown. The endpoint device 214 is in communication with gateway 221, via communications network 150. This communication implements header compression, for example as described with reference to figure 1 above. In particular, compression is performed with regard to a profile 214 available at the endpoint device and a profile 234 at the gateway 221. The profile 234 is stored in a registry 231.

The profile 214 and 234 may correspond to the contexts 100a and 100b described with reference to figure 1. As described above, the profiles may be identical, or the profile at the endpoint may comprise a simplified profile comprising a subset of the rules of the profile available at the gateway. The profiles may constitute enriched profiles in the sense of the SCHC profile as defined in IETF proposal "draft-ietf-lpwan-schc-over-lorawan-04" by O. Gimenez and I. Petrov dated November 04, 2019, IETF proposal "draft-ietf-lpwan-schc-over-sigfox-01" by JC. Zuniga, C. Gomez and L. Toutain dated November 4, 2019 and "draft-ietf-lpwan-schc-over-nbiot-00" by E. Ramos and A. Minaburo dated May 04, 2019, where an identifier associates Rules (the context of figure 1) with metadata, a certification chain, and a signature, or further profile structures as may be developed in the future.

As shown, endpoint 214 is programmed with an identifier "X". The endpoint 214 is adapted to transmit this identifier to the respective gateway, whereupon the gateway is adapted to retrieve the profile 234 corresponding to the received identifier from the registry 231. Once the corresponding profile 234 is retrieved, the Gateway can decompress messages from the endpoint, and as appropriate, transmit compressed messages to the endpoint with the expectation that they will be correctly decompressed.

Accordingly, the gateway of the system of figure 2 can communicate with any number of endpoints, any or all of which may each implement a different compression/decompression protocol- so long as a suitable corresponding profile can be made available in the registry, and retrieved on the basis of the identifier emitted by the endpoint, communications may be entered into with new devices as they are added to the network.

Accordingly, there is provided a gateway for a communication system supporting header compression, the system comprising a one or more endpoint devices, one or more gateway devices, header compression being performed with regard to a profile available at a said endpoint device and a respective said gateway, header compression being defined by a profile, said profile being stored in a registry, wherein the gateway is adapted to extract an identifier from a message received from said end point, to retrieve the profile corresponding to said identifier from said registry, and to communicate with said endpoint on the basis thereof.

Similarly, there is provided a communication system supporting header compression, comprising a one or more endpoint devices, one or more gateway devices as set out in the preceding paragraph, and a registry.

The registry may be stored in a local memory or storage device of the Gateway.

The registry may be a single entity, or may be constituted as multiple sub-registries as discussed below.

The registry may be stored remotely to the Gateway. In particular, the registry may be a centralized registry, accessible by multiple gateways, e.g. as represented by the communications shown in figure 2 between optional additional gateway 222 and the registry 231. On this basis, for a new device or type of devices, a single registry entry may be made, whereby when that device or a device of that type enters into communication with any gateway in communication with the central registry containing that entry, the gateway in question may retrieve the appropriate profile and enter into communications accordingly.

The identifier emitted by the endpoint may take any form as may readily occur to the skilled person. The identifier may comprise the MAC address of the device, IP address, device ID (e.g. LoRaWAN DevEui), mobile telephony network identifier such as an IMSI, or the like, or any convenient value as may be stored in the device, in hardware, firmware or software. The identifier may be unique to each device, in which case the registry may comprise a table mapping individual identifiers corresponding to devices communicating using a particular profile to the appropriate profile. In other words, the identifier may correspond uniquely to the endpoint device, wherein the registry or the gateway is configured to determine the profile corresponding to the identifier, and to provide the corresponding profile.

Alternatively, an identifier may be common to devices of a particular type, (as may be represented in figure 2 by the geometric shape representing each endpoint device, with devices 211 and 212 both being represented by pentagons, devices 213 and 214 both being represented by hexagons, devices 215 and 216 both being represented by circles, etc.) where these devices all communicate using the same profile, in which case the registry may comprise a table mapping device type identifiers corresponding to the appropriate profile. On this basis, device 213 might transmit the same identifier "X" as device 214. Alternatively, the identifier may correspond directly to a profile, so that all devices using that profile would provide the identifier of the profile to be retrieved by the gateway. On this basis, devices 215, 216 and 213 might transmit the same identifier "X" as device 214. This approach obviates the need for a mapping table at the registry/gateway, but may be restrictive in cases where the profile needs of different classes of endpoint device diverge over time. Accordingly the identifier may correspond to a profile that is common to one or more endpoint devices.

Optionally, the message may incorporate authorization information, which may be validated against information stored in the registry entry for the provided identifier, whereby the corresponding profile is returned for use by the gateway only if the authentication is validated. Authorizations may be provided on a per function basis, so that the corresponding profile is returned for use by the gateway only if the provided authentication is validated for a function defined or reflected in the message comprising the identifier.

As such, the endpoint device may be adapted to further include authentication data in said bitstream transmitted by said endpoint device. This authentication data may be a secret value shared by the endpoint and said gateway or said registry. The secret value may be a certificate of the endpoint, signed by a certification authority. The certificate may be defined in the profile, as stored in the registry, and/or as available at the endpoint.

Once a profile is retrieved, the profile may be stored at the Gateway, and successive communications by the gateway with a particular endpoint, or other devices using the same identifier, may be performed with that profile without needing to retrieve the profile for each further compression or decompression. In order to save local storage space, profiles that have not been used for a predefined duration may be discarded by the gateway (and retrieved again if required at some later time). To allow for system evolution, profiles may be periodically discarded. Alternatively, the gateway may poll the registry from time to time do determine whether a particular profile has been updated, for example with reference to a version number, or by comparing a hash of the local profile and the registry version, and replacing the local version when necessary.

In certain embodiments, the system may additionally be adapted to notify a third party of the successful authentication of an endpoint.

It will be appreciated that when a new device is added, the basic format of its communications may be unknown, which may make it impossible to reliably extract the identifier value. One solution to this problem is to require that all devices include the identifier in a bitstream transmitted to said gateway, wherein the bitstream is padded as needed to align the identifier at a particular position in the transmitted data structure. For example, the bitstream may be padded so as to Byte align the identifier value. Where a larger structure is common to all devices, the identifier may similarly be aligned to this structure.

Still further, the endpoint device may be adapted to include a marker bit sequence in the bitstream transmitted by said endpoint device in byte alignment with said identifier. On this basis, by looking for a particular characteristic value in the bitstream. For example, this byte alignment may be achieved by including padding in the bit stream as necessary. For example, as shown in table 1 below, byte n+1 is created by padding the last bits of the preceding data stream, such that the characteristic value "01010101" coincides with byte n+2. On this basis, the gateway receiving this sequence can determine the presence of the identifier value in bytes n+3 and n+4, extract this value and safely retrieve the corresponding profile as discussed above.

| Byte n | Byte n+1 | | Byte n+2 | Byte n+3 | Byte n+3 | |
|---|---|---|---|---|---|---|
| data | data | Byte alignme nt padding | Characterist ic value | identifier | | Data |
| ...XXXXXXXX | XXXX | 1111 | 01010101 | 1100100 1 | 1001110 0 | XXX .... |

Any error in such a sequence may lead to the retrieval of an incorrect profile, or failure to retrieve any profile. To avoid this occurring, a message comprising an identifier as discussed above may comprise a check sequence, error detecting code or error correction code, such as a hash, checksum, Cyclic Redundancy Check, or the like.

As set out above, the association of an identifier and a registry entry provides a mechanism for flexibly matching profile pairs between a gateway and an endpoint. As will now be addressed, this association raises other possibilities which may operate in parallel or independently.

In particular, the association of an identifier and a registry entry may additionally or alternatively provide a mechanism for managing endpoints more generally. This becomes particularly relevant in "Internet of Things" scenarios where large numbers of endpoints are to be managed.

Besides profile information as discussed above, the registry may store other information about an endpoint, group of endpoints, class or type of endpoint, or the like.

As shown, the Registry may be accessible not only to one or more gateways, but also to other entities. For example, as shown the registry may be may be open, so that any entity may consult some or all of the information contained therein, for example as discussed above.

Furthermore, additionally or alternatively, for example, as shown the registry may be accessible by developers, so that developers may retrieve a profile to be implemented in an endpoint device, for example that they are developing for release. Still further, developers might be afforded an enhanced access whereby they may also add new profiles to the registry (for example in the case of a new device type they have developed), or update existing registries (to support new functions or to further optimize compression, etc,),

Other types of access to some or all of the registry or registries may also be envisaged, as a function of the roles and responsibility of the entity in question, their associated trust level, and the types of information that they may consume or generate in the usual course of events.

As such, various interested parties may interact with the registry, in various capacities.

Certain parties, such as developers may register a new or modified profile, and/or define associations between one or more endpoints and a corresponding profile, for example when releasing or commissioning a new or modified endpoint. Such parties may also de-register or delete a profile, or associations between a profile and one or more endpoints.

Certain parties such as endpoint owners or users may define associations between one or more endpoints and a corresponding profile, for example when commissioning or configuring and endpoint. Such parties may also deregister or delete one or more endpoints.

Certain parties, which in some cases may include any party, may consult the register to retrieve publically available information concerning a profile or, where applicable, an associated endpoint.

As suggested by the foregoing, in addition to, or independently of the association of profiles to identifiers, the registry may be used to compile data concerning the life of the endpoint. This may include data concerning the device type, device characteristics, manufacturer, date of manufacture, date of commissioning, owner, installation location, authorized functions, run time, data traffic characteristics, YANG models, SIDs, Developer Certificates, LoRaWAN Keys, Service payment details, Licensing details and the like. Where the identifier is associated with and enriched profile as mentioned above, some of these elements may be included in the profile itself. It will be appreciated that certain of these details may be more or less sensitive depending on the characteristics of the system as a whole, and the installation characteristics of each endpoint, so that data security issues as mentioned above quickly become important. At the same time, the available of information across a large number of endpoints is potentially of great value in terms of data analytics, so that there is a somewhat contradictory desire to make information as broadly available as possible. Such analytics may be performed as a matter of course, and the register may comprise an additional indicator associated with a particular user, entity, or end point, profile, identifier or group thereof, specifying whether that particular user, entity, or a user or entity associated with such an end point, profile, identifier or group thereof, is entitled to access such analytics data or specified subset thereof.

As implied by the preceding discussion, a number of levels of rights may be defined in the registry. Different pieces of information for a given endpoint may have different levels of protection. For example, a particular endpoint, for example as defined by its as discussed above, and possibly by its identifier and additional details in cases where one identifier corresponds to multiple endpoints, may be associated with public information and one or more levels of protected information. A wide range of different distributions of rights may be imagined. Once scenario is set out below by way of example:
Level 1: Anyone can read this data.
   Read-only registrar requires Level 1 registry membership.
   Publishing requires Level 1 registry membership.
   Type of stored data: profiles, certificates, SIDs, device characteristics.
Level 2: Reading this data is subject to conditions.
   The registrar must be able to enforce the conditions.
   Reading or publishing requires Level 2 membership.
   Type of stored data: Same as in Level 1, but for private use.
Level 3: This data should not be readable even for the registrar.
   The registrar must be able to enforce the conditions.
   Reading or publishing requires Level 3 membership.
   Type of stored data: private keys or shared secrets.

Level 3 registry data may be stored on dedicated hardware to further reinforce security.
A distributed registry may provide additional reinforcement.

Another approach to privacy considerations is to break the registry into a number of sub-registries, of which some are public, and others are private.

Private sub-registries may be reserved for recording information for the endpoints of a particular entity. Public sub-registries may centralize public information. A particular endpoint may have entries on multiple sub-registries, in particular with level 1 (for example) information appearing on public sub-registries, and level 2 (for example) information appearing only on the private sub-registry or sub-registries of the owner of the endpoint.

The two preceding approaches may of course also be used together, for example with different security levels being defined in public registries for the storage of level 3 information so as to enable secure communications and the like.

It may be desirable to provide multiple registries or sub-registries for other reasons. For example, where a registry stores data for a very large number of endpoints, spread across a large geographical area, it may be desirable to provide sub registries for sub regions, or other suitable operational subdivisions, so as to reduce latency in responding to queries in any particular region for example.

Figure 3 presents an embodiment of a distributed registry.
As shown in figure 3, there is provided a registry as described above presenting a hierarchical sub-structure. Specifically as shown there is provided a common public registry 300, which in accordance with the present embodiment is maintained by a public body. This top level registry comprises level 1 information as set out above, in particular the profiles of endpoints used by two entities "company 1" 301 and "company 2" 302. Each of these entities 301, 302 maintains a local copy of the Public registry 300, as public registries 310, 320.In accordance with this embodiment, these local copies are identical to the top level public registry 300. In other embodiments, a local copy may be a partial copy of a definitive version which may be stored in one of the registries, for example the top level public registry. Alternatively, the registry may be seen as comprising all sub-registries, in which case the definitive profile may be seen as the combination of multiple partial profiles, which may be distributed across multiple sub-categories. The local copies are regularly updated from the top level Public registry, and are made available to users external to the company by which they are operated offering improved response times to local users as a public service. Certain types of modification to any of the copies of the Public registry are propagated to the other public registries.

Meanwhile, each company 301, 302 also maintains a Private registry 311, 321 respectively. These private registries contain a subset of the information in the respective Public registries 310, 320. In particular, private registries 311, 321 contain the data present in the public registries that relates to endpoints owned, operated or supported by the company operating the respective private registry. Furthermore, each private registry is enriched with additional information concerning the endpoints owned, operated or supported by the company operating the respective private registry that is not available in the public registries, such as level 2 information as set out above.

Each company 301, 302 further maintains additional copies of the respective private registries 311, 331. Specifically, as shown, company 1 maintains additional private registries 312 and 313, and company 2 maintains additional private registries 322 and 323. The private registries maintained by each company may be identical with changes made to one being propagated to the others. Alternately, the endpoints owned, operated or supported by each company may be divided between the sub-registries maintained by the respective company, and thus only appear in one sub registry, albeit potentially moving from one sub-registry to another as circumstances dictate. Other configurations will readily occur to the skilled person. Certain updates to one or more Private registries may be propagated up to the Public registries.

Accordingly, embodiments can serve as an interface between companies. This may support Roaming of endpoints, propagation of Secrets, and so forth.

Registry entries may be valid for a predefined period, after which an entry owner must reregister.

The Registry, or one or more sub-registries thereof may define priority categories, whereby certain processing tasks associated with register entries may be performed in order of priority.

As described above, registry entries, or individual components of entries, may be subject to differing degrees of protection. Some Registry entries, or individual components of entries, may be open (readable) to the public, while others may remain private. Registry entries, or individual components of entries which are defined a private, may default back to a public setting after a predefined period unless re-registered as private.

In some cases, different levels of registry performance may be available to users, for example depending on the availability of a local sub-register, or on the processing, storage or communications resources allotted to a particular profile, identifier, endpoint, or group thereof. Particular users may be explicitly entitled to certain levels of performance on this basis. Performance level entitlements may be stored in the Registry, in association with the particular profile, identifier, endpoint, or group thereof concerned.

The preceding registry interactions may take place via any convenient interface mechanism, e.g. via an API or the like.

Endpoints may also engage in registry interactions, either in channel, or via a parallel communications channel. While in some embodiments the endpoint profile is loaded at fabrication or initial configuration, in other embodiments the endpoint may download profile updates from the registry.

Still further, endpoints may have the capacity to perform certain operations, but only be permitted to perform these operations on receiving an authorization from the registry. This mechanism may provide a means for endpoint designers etc. to future proof their devices by implementing features which are not yet supported by other system components, but which may be activated when support becomes available, or the like. This mechanism may provide a means for endpoint owners etc. to improve system security by deactivating sensitive or advanced features for exposed endpoints, endpoints subject to regular security attacks or malfunctions, endpoints demonstrating suspicious behaviors, and the like.

In some cases, third party users may also be able to access some or all information present in a private registry for a certain endpoint, for example where the private registry is operated as a service for such third parties.

The rights of each endpoint may be defined in the registry, e.g. in association with the identifier of the device. An endpoint may then request the activation of a particular feature together with its identifier as described above, and depending on the registry entry associated with that identifier, a return message authorizing activation of the requested feature, or not as the case may be, may be transmitted to the endpoint.

In some cases, including scenarios where the endpoint and registry communicate, for example as described in the preceding paragraph, it may be desirable to provide enhanced authentication of endpoint. For example, the identifier may be encrypted, for example with a public key of the registry or the gateway. On this basis, the registry may confirm that a request is valid, and not for example an attempt to enable features for one device using the identifier of another.

In some embodiments, for example where the gateway and registry are separate entities, and where the public key of the registry is used to encrypt the identifier, this approach may have the additional benefit of masking the identifier of a device from the gateway.

As mentioned above, the registry may be a single entity, or may be constituted by a plurality of sub-registries. Where multiple gateways are present, one or more gateways may communicate with a particular sub-registry. This may be the case for example where multiple parallel systems use respective sub-registries of a single overarching registry. For example, the water pressure sensing endpoints in the water distribution network of Paris may be operated by a first company, and, the water pressure sensing endpoints in the water distribution network of Arcueil may be operated by a second company. The endpoints of both companies may be defined in a single registry, and only distinguished by their ownership characteristics. The endpoints of the first company may be defined in a first respective sub-registry of the registry, and the endpoints of the second company may be defined in a second respective sub-registry of the registry, where the two sub-registries are defined as separate entities, for example as separate tables in a relational database. Still further, there may be provided a plurality of parallel systems, each system corresponding to that of figure 2, with an additional communications interface linking the registries of the respective systems.

As mentioned above, the registry may associate ownership information with each endpoint, group of endpoints, etc. An extension of this functionality is that the registry may be used as a platform for implementing transfer of ownership. As mentioned above, the owner of a device may have particular privileges in terms of managing an endpoint through the registry, which need to be transferred to a new owner in parallel with an associated legal transaction.

In the different scenarios described above, such a transfer may require the creation of a new entry in the new owner's register or sub-register (and cloning of data from the original), and coordinated deletion or modification of the entry for the endpoint in question in the old owner's register or sub-register, or merely the coordinated modification of the "owner" entry in a universal register. On this basis it may be anticipated that in certain embodiments a single end point has entries in multiple registries, reflecting the transitions of that end point from owner to owner. All entries apart from that of the current owner may be presumed to be retained for archival purposes.

Since in functional terms the registry determines possession of an endpoint, it is necessary that the registry implement suitably robust trust enforcement mechanisms, for example to prevent a third party from abusively asserting ownership and taking control of a device. This may suggest that management communications such as those authorizing a relinquishment of control over an end point in favour of a third party should be secured, for example on the basis of reference to a shared secret between the owner and the corresponding registry, for example as stored in the Level2 security part of the registry as set out above.

It will be appreciated that although the term "owner" has been used in this discussion as reflecting legal ownership, the same mechanism equally be used independently of issues of legal ownership. For example, different business units within the same legal entity, or even individual human operators may be considered to be owners in some cases.

It will be appreciated that in addition to providing a mechanism for coordinating the use of profiles as described with reference to figure 2, embodiments of the invention may conveniently provide additional services. For example, the registry (or registry sub-structure) may serve as an out-of-band channel, permitting the sharing of information concerning endpoints, their operators, data, metadata, Security / protection context, Manufacturer Usage Description (MUD) etc., between entities.

In certain embodiments, it may be presumed that the profile in the endpoint is set at manufacture, instantiation or configuration. In other cases, the endpoint may receive updated profile information during its operational period. This profile information may include any of the information associated with the profile as stored in the registry as described above. This profile information may be shared in band. Alternatively, the endpoint may access the registry (including a local sub-registry for example), to retrieve the required information. Furthermore, since the gateway may update the profile as stored in the registry, this may provide a parallel channel for signaling from gateway to endpoint.

This in turn may help support a seamless integration of services and service discovery functions. The aggregation of data implied by the general approach will also tend to support transcoding and computation based on registered information.

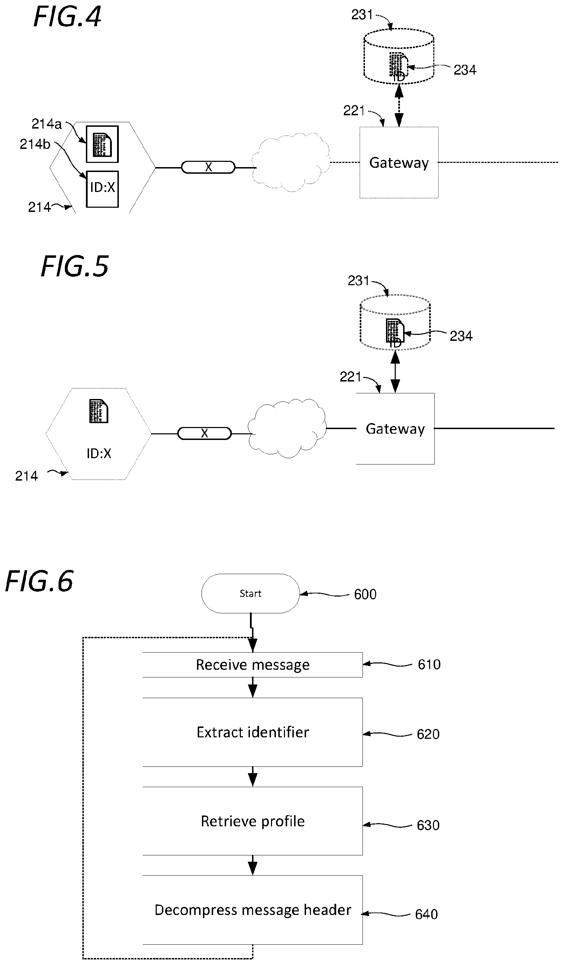

Figure 4 shows an endpoint in accordance with an embodiment.
As shown, there is provided an endpoint 214 substantially as described above, comprising a first storage means 214a storing a profile and a second storage means 214b storing an identifier. The endpoint is adapted to perform header compression of messages transmitted to a gateway in accordance with the profile. The endpoint is further adapted to incorporate the identifier in at least one message transmitted to the gateway 221.
As shown, the endpoint 214 is adapted to transmit the identifier to the gateway 221 so as to enable said gateway 221 to retrieve said profile 234 from a registry 231 and to communicate with the endpoint 214 on the basis thereof.

The endpoint of figure 4 may be further adapted in accordance with any of the variants presented above for example with reference to figures 2 or 3.

Figure 5 shows a registry in accordance with an embodiment.

As shown, a registry 231 substantially as described above, is adapted to return to a gateway 221 a profile 234 associated with an identifier provided by said gateway 221, said identifier having been extracted from a message, the message being header compressed in accordance with the profile 234 by an endpoint 214.

The registry of figure 5 may be further adapted in accordance with any of the variants presented above for example with reference to figures 2 or 3.
Figure 6 shows the steps of a message in accordance with an embodiment.

In particular, figure 6 shows steps of a method of performing header compression in communications between an endpoint and a gateway, for example as described above.

As shown in figure 6, the method starts at step 600 before proceeding to step 610 at which the gateway (e.g. gateway 221 as described above) receives a message compressed in accordance with a profile (for example as described with reference to figure 1 above). The message comprises an identifier, as described above. The method next proceeds to step 620 of extracting the identifier from the message, and then proceeds to step 630 at which the gateway retrieves a profile corresponding to the identifier extracted from the message from a registry, for example registry 231 as described above. The method then proceeds to step 640 at which the gateway decompresses a message from the endpoint (possibly the message from which the identifier was extracted) on the basis of the profile (for example as described with reference to figure 1 above).

The skilled person will recognize that the method of figure 6 may be adapted as required to incorporate further steps corresponding to the operations of any of the components of the systems described above, for example with reference to figures 2, 3, 4 or 5.

As shown, the method may loop back to step 610 to repeat the steps for a further message. Alternatively, as described above, the retrieved profile may be stored locally and used for the processing of further messages as described above.

Header compression/decompression profiles are stored in a central registry, or database, and provided on demand, on initialisation of a new device, from time to time, or otherwise, to gateways communicating with one or more endpoints in accordance with the profile in question. The profile to be retrieved is selected on the basis of an identity value included in a message transmitted from the endpoint. The identity may be unique to a particular endpoint, or a type or class of endpoints using a particular profile, or correspond directly to the profile, or otherwise. Distributed registry structures, possibly including private and public registers, are proposed. Different classes of information may be associated with each profile, which may be subject to varying degrees of protection, and or varying access conditions.

The skilled person will appreciate that embodiments, including certain of those presented above, may be implemented by means of software code.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figure 6. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.
In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

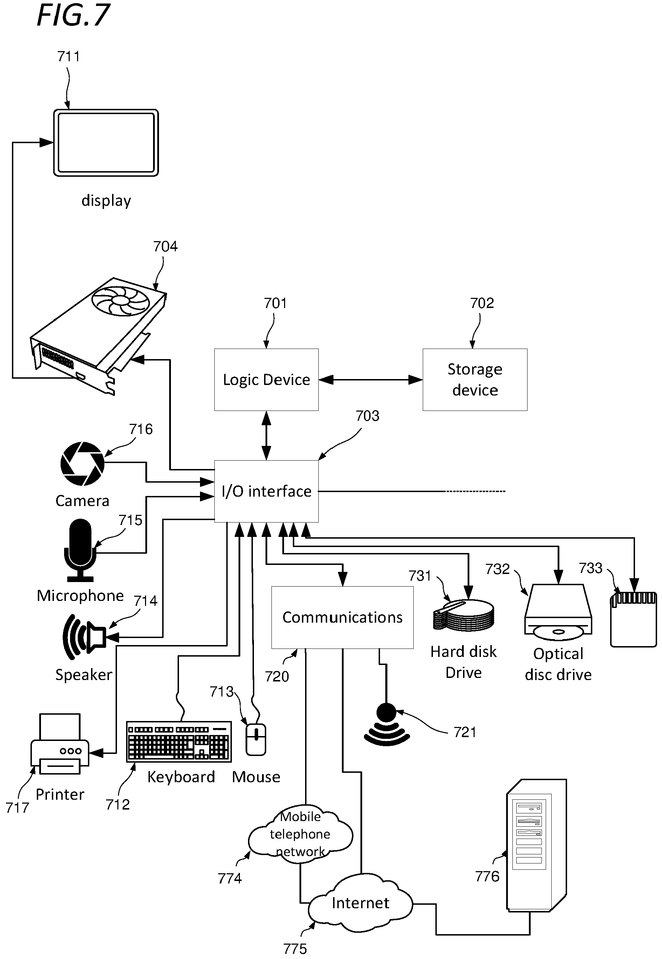

Figure 7 shows a generic computing system suitable for implementation of embodiments of the invention.
A shown in figure 7, a system includes a logic device 701 and a storage device 702. The system may optionally include a display interface 704 and display 711, input/output subsystem 703, communication subsystem 720, and/or other components not shown.

Logic device 701 includes one or more physical devices configured to execute instructions. For example, the logic device 701 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.
The logic device 701 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 701 optionally may be distributed among two or more separate devices, which may be remotely located and/or configured for coordinated processing. Aspects of the logic device 701 may be virtualized and executed by remotely accessible, networked computing devices configured in a cloud-computing configuration.
Storage device 702 includes one or more physical devices configured to hold instructions executable by the logic device to implement the methods and processes described herein. When such methods and processes are implemented, the state of storage 702 device may be transformed - e.g., to hold different data.
Storage device 702 may include removable and/or built-in devices. Storage device may be locally or remotely stored (in a cloud for instance). Storage device 702 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.
In certain arrangements, the system may comprise an interface 1003 adapted to support communications between the logic device 1001 and further system components. For example, additional system components may comprise removable and/or built-in extended storage devices. Extended storage devices may comprise one or more types of storage device including optical memory 732 (e.g., CD, DVD, HD-DVD, Blu-Ray Disc, etc.), semiconductor memory 733 (e.g., RAM, EPROM, EEPROM, FLASH etc.), and/or magnetic memory 731 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.
It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.
Aspects of logic device 701 and storage device 702 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.
The term "program" may be used to describe an aspect of computing system implemented to perform a particular function. In some cases, a program may be instantiated via logic device executing machine-readable instructions held by storage device 702. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.
In particular, the system of figure 7 may be used to implement embodiments of the invention.
For example a program implementing the steps described with respect to figure 6, or the algorithms presented above may be stored in storage device 702 and executed by logic device 701. The functions of each end point may be implemented on such a platform. The functions of each gateway may be implemented on such a platform. The functions of each registry may be implemented on such a platform. The functions of each gateway in combination with a respective register may be implemented on such a platform. The data message and/or data component may be received and/or transmitted via the communications interface 720, and in particular via radio network 774 or the internet 775. The profile may be received and/or transmitted via the communications interface 720, and in particular via radio network 774 or the internet 775. The data message, and/or data component may be buffered or otherwise stored in storage device 702, 731, 732, 733. The Profile may be stored in storage device 702, 731, 732, 733. The functions of any or all of the units 214, 221, 231 or any or all of their respective sub units, may similarly be implemented by a program performing the required functions, in communication with additional dedicated hardware units as necessary. Accordingly the invention may be embodied in the form of a computer program.
It will be appreciated that a "service", as used herein, is an application program executable across multiple user sessions. A service may be available to one or more system components, programs, and/or other services. In some implementations, a service may run on one or more server-computing devices.
When included, display subsystem 711 may be used to present a visual representation of data held by a storage device. This visual representation may take the form of a graphical user interface (GUI). As the herein described methods and processes change the data held by the storage device 702, and thus transform the state of the storage device 702, the state of display subsystem 711 may likewise be transformed to visually represent changes in the underlying data. Display subsystem 711 may include one or more display devices utilizing virtually any type of technology for example as discussed above. Such display devices may be combined with logic device and/or storage device in a shared enclosure, or such display devices may be peripheral display devices. An audio output such as speaker 714 may also be provided.
When included, input subsystem may comprise or interface with one or more user-input devices such as a keyboard 712, mouse 713, touch screen 711, or game controller (not shown).

When included, communication subsystem 720 may be configured to communicatively couple computing system with one or more other computing devices. For example, communication module of communicatively couple computing device to remote service hosted for example on a remote server 776 via a network of any size including for example a personal area network, local area network, wide area network, or internet. Communication subsystem may include wired and/or wireless communication devices compatible with one or more different communication protocols. As nonlimiting examples, the communication subsystem may be configured for communication via a wireless telephone network 774, or a wired or wireless local - or wide-area network. In some embodiments, the communication subsystem may allow computing system to send and/or receive messages to and/or from other devices via a network such as Internet 775. The communications subsystem may additionally support short range inductive communications with passive or active devices (NFC, RFID, UHF, etc.). In certain variants of the embodiments described above, the traffic data may be received via the radio network 774 or Internet 775.

The system of figure 7 is intended to reflect a broad range of different types of information handling system. It will be appreciated that many of the subsystems and features described with respect to figure 7 are not required for implementation of the invention, but are included to reflect possible systems in accordance with the present invention. It will be appreciated that system architectures vary widely, and the relationship between the different sub-systems of figure 7 is merely schematic, and is likely to vary in terms of layout and the distribution of roles in systems. It will be appreciated that, in practice, systems are likely to incorporate different subsets of the various features and subsystems described with respect to figure 7.

Examples of devices comprising at least some elements of the system described with reference to figure 7 and suitable for implementing embodiments of the invention include cellular telephone handsets including smart phones, and vehicle navigation systems, distributed sensors, smart domestic appliances, connected industrial infrastructure equipment Smart city implementations or components, smart energy consumption implementations or components, finding articles or persons, medical, emergency services, agriculture, wearable sensors for humans and other species and so on.

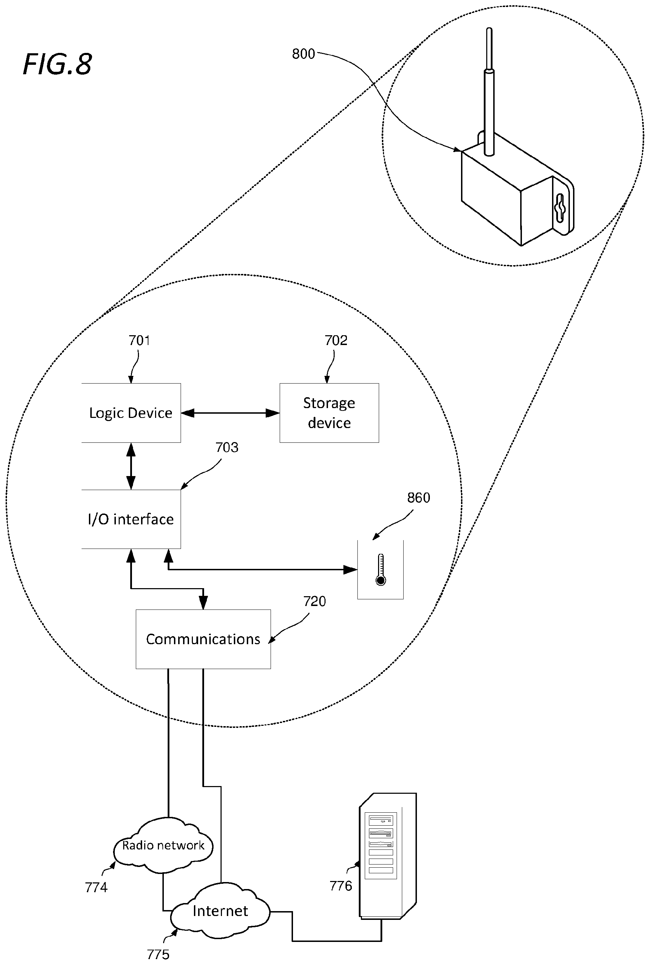

Figure 8 shows a standalone sensor device adaptable to constitute an embodiment. The standalone sensor device 800 of figure 8 may represent a typical "Internet of Things" component. Such devices are often subject to significant constraints in terms of communications bandwidth, power consumption, processing and memory capacity, and as such may benefit from many of the mechanisms presented in the foregoing discussion. As shown in figure 8, the standalone sensor device incorporates elements 701, 702, 703, 720 as described above, and sensor device 860. It is in communication with the radio network 774 and a server 776, possibly performing the functions of the gateway as described above, via the network 775. Alternative communication mechanisms such as a dedicated network or Wi-Fi may also be used.
As shown the sensor device is a temperature sensor, however it will be appreciated that it might equally embody any other type of sensor, or other transducer, or a plurality of transducers as appropriate to the role of the device.
It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.
The subject matter of the present disclosure includes all novel and non-obvious combinations and sub-combinations of the various processes, systems and configurations, and other features, functions, acts, and/or properties disclosed herein, as well as any and all equivalents thereof.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.
The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A gateway for a communication system supporting header compression, said system comprising a one or more endpoint devices, one or more gateway devices, said header compression being performed with regard to a profile available at a said endpoint device and a respective said gateway, said header compression being defined by a profile, said profile being stored in a registry,
wherein said gateway is adapted to extract an identifier from a message received from said end point, to retrieve the profile corresponding to said identifier from said registry, and to communicate with said endpoint on the basis thereof.

2. A communication system supporting header compression, said system comprising a one or more said endpoint devices, one or more gateway devices according to claim 1, and a said registry.

3. The gateway of claim 1 or the system of claim 2 wherein said identifier corresponds uniquely to a respective said endpoint device, and wherein said registry is configured to determine the profile corresponding to said device identifier, and to provide said corresponding profile.

4. The gateway of claim 1 or the system of claim 2 wherein said identifier corresponds to a profile that is common to one or more said endpoint devices.

5. The system of any of claims 2 to 4 wherein successive communications with a said endpoint with the same identifier are performed using said profile.

6. The system of any of claims 2 to 5 wherein said endpoint device is adapted to include said identifier in a bitstream transmitted to said gateway, wherein said bitstream is padded so as to byte align said identifier.

7. The system of any of claims 2 to 6 wherein said endpoint device is adapted to further include a marker bit sequence in said bitstream transmitted by said endpoint device in byte alignment with said identifier.

8. The system of any of claims 2 to 7 wherein said endpoint device is adapted to further include authentication data in said bitstream transmitted by said endpoint device.

9. The system of claim 8 wherein said system is adapted to notify a third party of the successful authentication of an endpoint.

10. The system of any of claims 2 to 9 wherein for any said endpoint said registry comprises an endpoint entry comprising public information and private information, where said private information is encrypted to a higher degree than said public information, wherein said profile is stored in said endpoint entry.

11. An endpoint comprising storage means storing a profile and an identifier, said endpoint being adapted to perform header compression of messages transmitted to a gateway in accordance with said profile, said endpoint being further adapted to incorporate said identifier in at least one said message transmitted to said gateway,
wherein said endpoint is adapted to transmit said identifier to said respective said gateway so as to enable said gateway to retrieve said profile from a registry and to communicate with said endpoint on the basis thereof.

12. A registry adapted to return to a gateway a profile associated with an identifier provided by said gateway, said identifier having been extracted from a message header compressed in accordance with said profile by an endpoint.

13. A method of performing header compression in communications between an endpoint and a gateway, said method comprising
said gateway receiving a message compressed in accordance with a profile comprising an Identifier,
said gateway retrieving a profile corresponding to said identifier from a registry,
said gateway decompressing a message from endpoint on the basis of said profile.

14. The method of claim 13 comprising further steps corresponding to the operations of any of the components of any of claims 1 to 12.

15. A computer program comprising instructions which, when the program is executed by a computer, cause the computer to carry out the method of claims 13 or 14.
